(19) **Europäisches Patentamt**

**European Patent Office**

**Office européen des brevets**

(11) Veröffentlichungsnummer: **0 276 712**
**A1**

(12) ## EUROPÄISCHE PATENTANMELDUNG

(21) Anmeldenummer: **88100586.2**

(22) Anmeldetag: **18.01.88**

(51) Int. Cl.⁴ **H04N 3/15** , H04N 5/217

(30) Priorität: **28.01.87 DE 3702476**

(43) Veröffentlichungstag der Anmeldung:
**03.08.88 Patentblatt 88/31**

(84) Benannte Vertragsstaaten:
**DE FR GB IT NL**

(71) Anmelder: **Menke, Josef-Ferdinand, Dipl.-Ing.**
**Fördestrasse 27**
**D-2392 Glücksburg(DE)**

(72) Erfinder: **Menke, Josef-Ferdinand, Dipl.-Ing.**
**Fördestrasse 27**
**D-2392 Glücksburg(DE)**

(74) Vertreter: **Riecke, Manfred**
**Neuköllner Strasse 8**
**D-6333 Braunfels(DE)**

(54) **Verfahren zur Homogenisierung und Qualitätsverbesserung eines Fernsehbildes.**

(57) Zur Homogenisierung und Qualitätsverbesserung eines mit einem Multielement-Detektor aufgenommenen Fernsehbildes wird durch geeignete Anordnung der einzelnen Elemente des Multielement-Detektors,sowohl in horizontaler als auch in vertikaler Richtung,erreicht, daß jedes einzelne Detektorelement an der Darstellung jedes einzelnen Bildpunktes mehrfach und zeitlich ausreichend beteiligt ist.

*Fig. 1*

EP 0 276 712 A1

## Verfahren zur Homogenisierung und Qualitätsverbesserung eines Fernsehbildes

Die Erfindung betrifft ein Verfahren zur Homogenisierung und allgemeinen Qualitätsverbesserung eines mittels eines Multielement-Detektors aufgenommemem Fernsehbildes.

Nach der CCIR-Norm besteht ein Fernsehbild aus 624 Zeilen plus 1 Umschaltzeile = 625 Zeilen, das in zwei Halbbildern zu je 312 Zeilen aufgenommen und geschrieben wird.

Dabei erhält man ein hinlänglich homogenes Bild, wenn dieses Bild mit einem Einzelelement-Detektor aufgenommen wird. Allerdings hat dieses Aufnahmeverfahren mit einem Einzelelement-Detektor den Nachteil, daß die Abtastung des Objektfeldes in der Bildhöhe (Höhenscan) in eben diesen $2 \times 312 + 1$ Einzelschritten zu erfolgen hat. In bekannter Weise läßt sich aber die Schrittzahl im Höhenscan dadurch reduzieren, daß statt eines Einzelelement-Detektors ein Multielement-Detektor verwendet wird, bei dem mehrere Einzelelemente übereinander angeordnet sind. Hiermit muß das Objektfeld nicht mehr in Einzelschritten Zeile für Zeile abgetastet werden, sondern es können bei jedem Schritt ganze Zeilenpaktet aufgezeichnet werden. Dabei ergibt sich die Paketzahl in einfacher Weise aus der Division von 624 durch die Elementenzahl. Bei Verwendung eines aus 8 Einzelelementen bestehenden Multielement-Detektors erfolgt demnach die Objektfeldabtastung in 78 Paketen, und daher mit deutlich verminderter Höhenschritt-Geschwindigkeit.

Leider hat dieses Verfahren einen erheblichen Nachteil in Bezug auf die erzielte Bildqualität. Das Bild, das man auf diese Weise erhält, ist nicht mehr homogen sondern streifig. Der Grund hierfür liegt darin, daß die einzelnen Elemente nicht die gleiche Empfindlichkeit besitzten. Das wirkt sich auf die Helligkeit und den Kontrast jeder Zeile aus, so daß bei einem aus 8 Elementen bestehenden Multielement-Detektor die absolut gleiche Helligkeit immer nur vorhanden ist z.B. in der 1.; 9.; 17.; 25. usw. Zeile, oder auch in der 3.; 11.; 19.; 27. usw. Zeile.

Der Erfindung liegt die Aufgabe zugrunde, diesen Nachteil zu überwinden und ein Verfahren anzugeben, mit dem eine wesentliche Homogenisierung und damit Qualitätsverbesserung eines mittels eines Multielement-Detektors aufgenommenen Fernsehbildes erreicht wird.

Diese Aufgabe ist durch ein Verfahren gelöst, das die im Anspruch 1 angegebenen Merkmale aufweist.

Das Bild ist immer dann homogen und von guter Qualität, wenn jedes einzelne Detektorelement an der Darstellung jedes einzelnen Bildpunktes mehrfach beteiligt ist. Wie oft ein Element an der Darstellung eines Bildpunktes beteiligt sein muß, richtet sich nach der Weiterverarbeitung des aufgenommenen Bildes. Wird bei der Weiterverarbeitung z.B. ein Sichtbild erzeugt, so muß die Wiederholfrequenz vorzugsweise gleich oder größer als 12 Hz sein, sie kann aber auch kleiner sein, wenn der Bildschirm in irgend einer Weise flimmerarm bzw. flimmerfrei ist. Wird das aufgenommene Bild dagegen mittels eines Servorechners weiterverarbeitet, so richtet sich die Wiederholfrequenz nach der Servobandbreite, die z.B. bei Feuerleitanlagen ca. 5 Hz beträgt.

Von besonders guter Homogenität/Qualität ist das aufgenommene Bild dann, wenn der Multielement-Detektor nicht nur aus einer linear übereinander angeordneten Reihe von Einzelelementen besteht, wobei an der Bilderzeugung pro Zeile dann jeweils nur 1 Element beteiligt ist, sondern wenn auf dem Detektor mehrere Einzelelemente auch nebeneinander angeordnet sind, so daß an der Bilderzeugung pro Zeile von vornherein mehrere Einzelelemente teilnehmen. Die nebeneinander angeordneten Einzelelemente haben ja auch bereits eine unterschiedliche Empfindlichkeit, so daß sich bei der Aufnahme einer Zeile deren unterschiedliche Empfindlichkeiten bereits mitteln.

Das erfundene Verfahren bewirkt die Homogenisierung/Qualitätsverbesserung mithin durch zwei unterschiedliche Maßnahmen, die aber beide auf eine quasi Mittelwertbildung zwischen den Empfindlichkeiten der verschiedenen beteiligten Einzelelemente hinauslaufen.

Nämlich zum einen durch ein Ineinanderschieben der Zeilenpakete in vertikaler Richtung, so daß die gleiche Bildzeile von mehreren Detektorzeilen aufgenommen wird; und zum anderen durch die Anordnung mehrerer Einzelelemente horizontal in einer Detektorzeile, so daß an der Aufnahme einer Zeile von vornherein mehrere Einzelelemente beteiligt sind.

In der Zeichnung ist die Erfindung am Beispiel eines 16-Elemente-Detektors dargestellt. Es zeigen:

Fig. 1 die 16 Elemente in vertikaler Einzelanordnung,

Fig. 2 die 16 Elemente in vertikaler Doppelanordnung,

Fig. 3 die 16 Elemente in quadratischer Anordnung.

In den Figuren ist auf der linken Seite jeweils die Zeilenzahl der CCIR-Norm, nämlich 625 Zeilen angegeben.

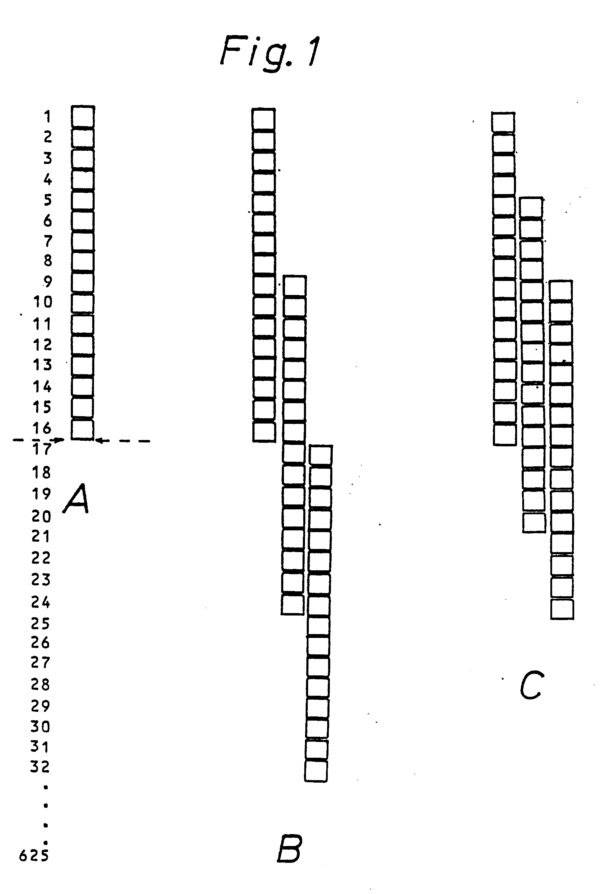

In Fig.1 besteht der 16-Elemente-Detektor aus 16 Einzelelementen, die in vertikaler Reihe übereinander angeordnet sind. Von diesem Detektor kann das Objektfeld z.B. in 624:16 = 39 Pakten aufgenommen (abgescant) werden, wie unter Fig.1A gezeigt. Dies ist aber gerade diejenige Anordnung, die überwunden werden soll, denn bei ihr iwrd in jedem Paket die gleiche Zeile von dem gleichen Einzelelement aufgenommen. Eine Vermittlung (Verwischung, Ausgleich) der unterschiedlichen Empfindlichkeiten der Einzelelemente findet nicht statt. Das Ergebnis ist ein in horizontaler Richtung streifiges Bild.

Eine Verbesserung wird erreicht, wenn die Zahl der Scan-Schritte bzw. der Aufnahmepakete verdoppelt wird. Dies ist unter Fig.1B dargestellt. Hier sind an der Aufnahme jeder Bildzeile bereits jeweils zwei Einzelelemente beteiligt, deren unterschiedliche Empfindlichkeiten vermittelt werden.

Eine noch weitergehende Verbesserung wird erreicht, wenn die Anzahl der Scan-Schritte noch weiter erhöht wird, wie in Fig.1C dargestellt. Hier sind an der Aufnahme einer Zeile bereits 3 Einzelelemente beteiligt. Immer abgesehen, natürlich, von der oberen und unteren Randzone.

Es sei besonders darauf hingewiesen, daß die Qualitätsverbesserung und Homogenisierung des Bildes bei dem Ausführungsbeispiel gemäß Fig.1 ausschließlich dadurch erreicht werd, daß die Zahl der Scan-Schritte erhöht wird, d.h. die Pakete werden quasi in vertikaler Richtung ineinander geschoben.

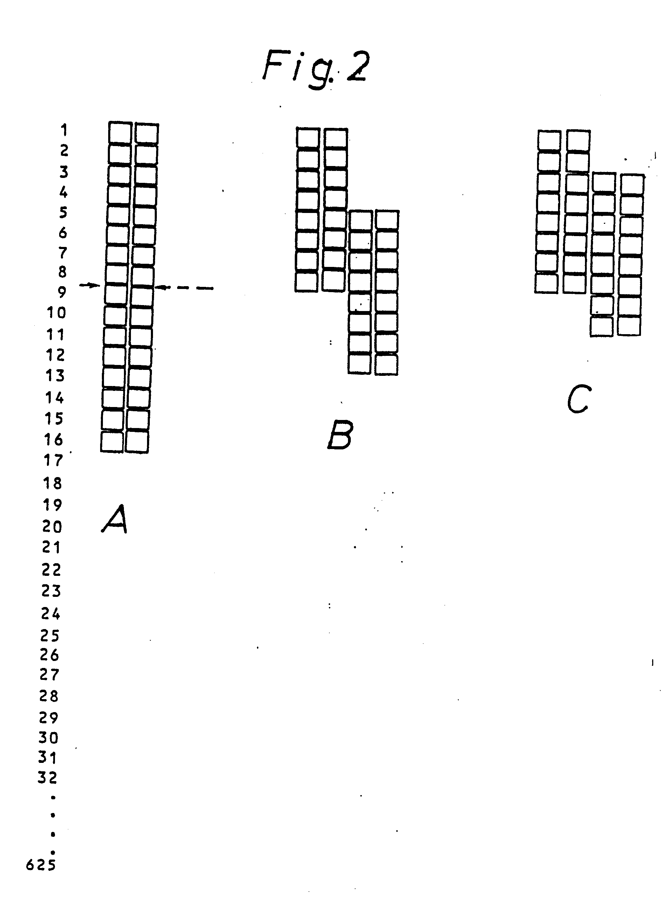

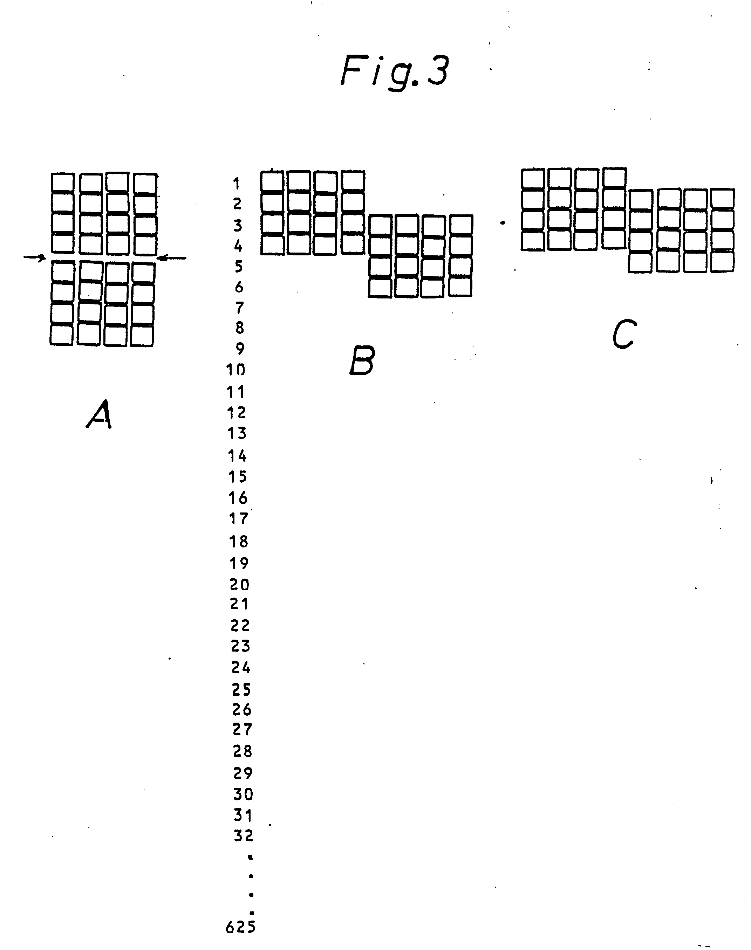

Daß man die Homogenisierung vor allem aber auch dadurch erreichen kann, daß von vornherein in horizontaler Richtung in einer Zeile mehrere Einzelelemente angeordnet werden, ist in den Figuren 2 und 3 schematisch dargestellt.

Fig.2 zeigt den 16-Elemente-Detektor in doppelreihiger Anordnung. Bei dem Beispiel gemäß Fig.2A erfolgt die Bildaufnahme daher in 624:8 = 78 Paketen, d.h. die Pakete sind in vertikaler Richtung einfach aneinandergereiht.

In den Fig.2B und 2C sind die Pakete zusätzlich noch in vertikaler Richtung ineinander geschoben, so daß an der Aufnahme einer Zeile nicht nur 2 sondern 4 Einzelelemente beteiligt sind, mit dem Ergebnis, daß die Homogenisierung noch weiter vorangetrieben ist.

Fig.3 zeigt schlielich die Elementenanordnung eines 16-Elemente-Detektors mit je 4 Einzelelementen in horizontaler Richtung nebeneinander. In Fig.3A sind die Pakete in vertikaler Richtung aneinander gereiht, so daß die Bildaufnahme in 624:4 = 156 Scan-Schritten erfolgt. Am weitesten wird jedoch auch hierbei die Homogenisierung des Bildes getrieben, wenn die Pakete zusätzlich noch in vertikaler Richtung ineinander geschoben werden. Die Fig.3B und 3C zeigen, daß dann jeweils 8 Elemente an der Aufnahme einer Zeile beteiligt sind.

Abschließend ist noch eine in der Praxis erarbeitete Tabelle beigefügt, aus der sich die erzielte Homogenisierung in Prozenten zwischen Maximal-und Minimalwert der einzelnen Elemente-Empfindlichkeiten bei einem 16-Elemente-Detektor ersehen läßt. Die Empfindlichkeit wird dabei mit der Größe D bezeichnet.

| 39 Pakete a 16 Elemente 1 Element/Zeile | 78 Pakete a 8 Elemente 2 Elemente/Zeile | 156 Pakete a 4 Elemente 4 Elemente/Zeile |
|---|---|---|
| $\overline{D}^{*}$ | $\overline{D}^{*}$ | $\overline{D}^{*}$ |
| $9,7 \times 10^{10}$ | $10,37 \times 10^{10}$ | $10,39 \times 10^{10}$ |
| $10,1$ " | $10,46$ " | $10,40$ " |
| $10,1$ " | $40,40$ " | $10,35$ " |
| $10,1$ " | $10,35$ " | $10,33$ " |
| $10,2$ " | $10,40$ " | $10,39$ " |
| $10,2$ " | $10,35$ " | $10,40$ " |
| $10,2$ " | $10,30$ " | $10,35$ " |
| $10,2$ " | $10,30$ " | $10,33$ " |
| $11,0$ " | $10,37$ " | $10,39$ " |
| $10,8$ " | $10,46$ " | $10,40$ " |
| $10,7$ " | $10,40$ " | $10,35$ " |
| $10,6$ " | $10,35$ " | $10,33$ " |
| $10,6$ " | $10,40$ " | $10,39$ " |
| $10,5$ " | $10,35$ " | $10,40$ " |
| $10,4$ " | $10,30$ " | $10,35$ " |
| $10,4$ " | $10,30$ " | $10,33$ " |
| kleinster Wert $9,7 \times 10^{10}$ | $10,30 \times 10^{10}$ | $10,33 \times 10^{10}$ |
| größter Wert $11,0$ " | $10,46$ " | $10,40$ " |
| Differenz $11,8\ \%$ | $1,55\ \%$ | $0,68\ \%$ |

In der linken Spalte sind die 16 Elemente einreihig untereinander angeordnet. Die Aufnahme wird daher in 36 Paketen gemacht, und es ist ersichtlich, daß die Empfindlichkeitsdifferenz der einzelnen Elemente ( = Zeilen) 11% des Größtwertes beträgt.

In der mittleren Spalte sind die 16 Elemente in Doppelreihe angeordnet. Dabei hat jede einzelne Detektorzeile ( = 2 Einzeldetektoren) die in der Tabelle angegebene Empfindlichkeit. Die Streuuung der Empfindlichkeit in einem Paket ist dabei schon wesentlich kleiner und beträgt nur noch 1,55% des Größtwertes.

Am günstigsten ist die in der rechten Spalte erfaßte Anordnung von 4 Einzelelementen pro Zeile. Durch die Vermittlung der Empfindlichkeitsstreuung der 4 Einzelelemente pro Zeile haben die einzelnen Zeilen untereinander nur noch die Empfindlichkeitsdifferenz von 0,07 D, d.h. von 0,68% des Größtwertes.

Diese niedrige Differenz wird dabei bereits erreicht durch einfaches Untereinandersetzen der 156 Pakete (4 Elemente/Zeile). Eine noch weiter getriebene Homogenisierung würde erreicht, wenn die Pakete auch noch in vertikaler Richtung ineinander geschoben wären, z.B. gemäß der Anordnung in Fig.3B, denn dann stünden in horizontaler Richtung nicht nur 4 sondern 8 Einzeldetektoren in jeder Zeile.

## Ansprüche

1.) Verfahren zur Homogenisierung und Qualitätsverbesserung eines mittels eines Multielement-Detektors aufgenommenen Fernsehbildes, dadurch gekennzeichnet, daß jedes einzelne Detektorelement an der Darstellung jedes einzelnen Bildpunktes mehrfach und zeitlich ausreichend beteiligt ist.

2.) Verfahren nach Anspruch 1, zur Erzeugung eines Sichtbildes, dadurch gekennzeichnet, daß die Wiederholfrequenz größer als 5 Hz ist.

# Fig. 1

A

B

C

# Fig. 2

# Fig.3

A

B

C

**Europäisches Patentamt**

**EUROPÄISCHER RECHERCHENBERICHT**

Nummer der Anmeldung

EP 88100586.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | <u>EP - A1 - 0 148 055</u> (SOCIETE ANONYME) <br><br> * Fig. 2; Seite 4, Zeilen 16-35 * <br><br> -- | 1 | H 04 N 3/15 <br> H 04 N 5/217 |
| X | <u>DE - A1 - 3 412 889</u> (CITIZEN WATCH) | 1 | |
| A | * Seite 4, Zeile 24 - Seite 5, Zeile 11; Fig. 1; Seite 6, Zeilen 12-27 * <br><br> -- | 2 | |
| A | <u>US - A - 4 612 581</u> (ENDO) <br><br> * Zusammenfassung; Spalte 1, Zeile 67 - Spalte 2, Zeile 1 * <br><br> -- | 1,2 | |
| A | <u>US - A - 4 481 539</u> (MEISE) <br><br> -- | | **RECHERCHIERTE SACHGEBIETE (Int. Cl.4)** |
| A | <u>US - A - 4 563 590</u> (GILLESSE) <br><br> ---- | | H 04 N 1/00 <br> H 04 N 3/00 <br> H 04 N 5/00 <br> H 01 L 27/00 <br> H 01 L 31/00 |

Der vorliegende Recherchenbericht wurde für alle Patentansprüche erstellt.

| Recherchenort | Abschlußdatum der Recherche | Prüfer |
|---|---|---|
| WIEN | 08-04-1988 | BENISCHKA |